# EUROPÄISCHE PATENTSCHRIFT

(11) **EP 2 185 982 B1**
(45) Veröffentlichungstag und Bekanntmachung des Hinweises auf die Patenterteilung: **20.04.2011**
(21) Anmeldenummer: 08804129.8
(22) Anmeldetag: 12.09.2008
(51) Int. Cl.: G05B 19/05

(54) **LEITTECHNIKSYSTEM FÜR EINE TECHNISCHE ANLAGE UND VERFAHREN ZUM BETREIBEN EINES LEITTECHNISCHEN SYSTEMS**
CENTRAL CONTROL AND INSTRUMENTATION SYSTEM FOR A TECHNICAL INSTALLATION AND METHOD FOR OPERATING A CENTRAL CONTROL AND INSTRUMENTATION SYSTEM
SYSTÈME TECHNIQUE DE COMMANDE POUR INSTALLATION TECHNIQUE ET PROCÉDÉ DE FONCTIONNEMENT D'UN SYSTÈME TECHNIQUE DE COMMANDE

(30) Priorität: 13.09.2007 DE 102007043794
(43) Veröffentlichungstag der Anmeldung: 19.05.2010
(73) Patentinhaber: Siemens Aktiengesellschaft, 80333 München (DE)
(72) Erfinder: JORDAN, Carsten, 91056 Erlangen (DE); STEINHAUER, Guido, 76744 Büchelberg (DE); UNKELBACH, Michael, 91054 Buckenhof (DE)
(86) Internationale Anmeldenummer: PCT/EP2008/062166
(87) Internationale Veröffentlichungsnummer: WO 2009/037199

(56) Entgegenhaltungen:
- WO-A-97/45778
- US-A- 5 436 855
- "TESTEN OHNE EINZUBAUEN" ELEKTROTECHNIK, 331951 1, Bd. 72, Nr. 11, 19. November 1990 (1990-11-19), Seiten 26-28,30,33, XP000175767 ISSN: 1431-9578

## Beschreibung

Die Erfindung bezieht sich auf ein leittechnisches System für eine technische Anlage, insbesondere eine Kraftwerksanlage, mit einer Mehrzahl von datenseitig miteinander verbundenen, von einem zentralen Kontrollmodul überwachten Funktionsmodulen. Sie betrifft weiterhin ein Verfahren zum Betreiben eines derartigen leittechnischen Systems.

In technischen Großanlagen wie beispielsweise Kraftwerksanlagen oder dergleichen kommen üblicherweise leittechnische Systeme oder Leittechniksysteme zum Einsatz, mit denen die Anlagenprozesse überwacht und gesteuert werden. Derartige leittechnische Systeme umfassen üblicherweise eine Vielzahl von Funktionsmodulen oder dergleichen, von denen jedes jeweils eine spezifische Aufgabe bei der Überwachung und Steuerung der Anlagenprozesse, beispielsweise die Überwachung und Steuerung einzelner Komponenten, die Erfassung bestimmter Prozessparameter, die Verwaltung und Steuerung der anfallenden Datenströme oder dergleichen, ausführt. Die Funktionsmodule tauschen dabei üblicherweise situations- und zustandsabhängig eine Vielzahl von Daten geeignet miteinander aus.

Zur geeigneten Ansteuerung und Aktivierung der Funktionsmodule sowie zur Überwachung des allgemeinen Prozessablaufs in einem derartigen leittechnischen System ist den Funktionsmodulen, die ihrerseits als eigenständige Hardwarekomponenten, als Software-Module oder als Mischformen daraus ausgelegt sein können, üblicherweise ein übergeordnetes zentrales Kontrollmodul zugeordnet, das den allgemeinen Datentransfer sowie die geordnete Sequenz bei der Bearbeitung der anfallenden Datenströme überwacht und gegebenenfalls steuert. Über ein derartiges zentrales Kontrollmodul, gegebenenfalls auch als "Scheduler" oder "Task Manager" bezeichnet, werden insbesondere die Funktionsmodule geeignet angesteuert und nach der Zuführung geeigneter Eingangsdaten zur Ausgabe entsprechender, von der jeweiligen Funktion des Moduls abhängiger Ausgangsdaten veranlasst.

Gerade bei Leittechniksystemen in großtechnischen Anlagen hoher Komplexität sind üblicherweise eine Vielzahl von Komponenten mit hochkomplexen Verfahrensabläufen zu überwachen und zu steuern. Gerade in derartigen leittechnischen Systemen, die demzufolge hinsichtlich der Anzahl, Auslegung und Struktur ihrer jeweiligen Funktionsmodule eine vergleichsweise hohe Komplexität aufweisen, ist für einen ordnungsgemäßen Programmablauf und Datenaustausch und damit eine hohe betriebliche Sicherheit üblicherweise die korrekte Einhaltung von vorgegebenen oder möglicherweise auch an externen Standards orientierten Nachrichtensequenzen von besonderer Bedeutung. Dabei ist insbesondere sicherzustellen, dass die Funktionsmodule derart geeignet und zeitgerecht angesteuert werden, dass die von ihnen jeweils gelieferten Ausgangsdaten, die ihrerseits als Eingangsdaten für andere Funktionsmodule benötigt werden, rechtzeitig vorliegen und an das Ziel-Funktionsmodul geeignet weitergeleitet werden können. Darüber hinaus sind generell zur ordnungsgemäßen Verwaltung derartiger hochkomplexer Prozesse geeignete Datenströme und die Synchronisation verschiedenartiger Einheiten miteinander genau einzuhalten.

Um dies zu ermöglichen, andererseits aber auch zur Sicherstellung einer ausreichend hohen Qualität bei der Berechnung von Zwischenergebnissen und dergleichen können einige oder alle der genannten Funktionsmodule in einer derartigen leittechnischen Anlage unter der Zugrundelegung von Aktionszyklen angesteuert oder ausgelegt sein. Bei einem derartigen Aktionszyklus wird - abhängig vom jeweiligen Funktionsmodul und dessen grundsätzlicher Auslegung - nach der Ansteuerung oder Triggerung des jeweiligen Funktionsmoduls ein darin geeignet vorgesehener Aktionszyklus mehrfach und wiederholt durchlaufen, bis ein gewünschter Endzustand erreicht ist. Der Aktionszyklus kann dabei beispielsweise lediglich aus einem Zählmechanismus bestehen, so dass bei geeigneter Vorgabe einer gewünschten Zyklenzahl durch den Programmierer sichergestellt werden kann, dass ein solchermaßen gesteuertes Funktionsmodul nach Durchlauf der vorgegebenen Anzahl von Zählzyklen, also erst nach einer hierdurch bedingten Wartezeit oder -spanne, ein Ausgangssignal, beispielsweise ein Stellsignal oder ein Zwischenergebnis, an ein anderes Funktionsmodul oder an die zentrale Kontrolleinheit ausgibt.

Alternativ kann beispielsweise in einem Funktionsmodul aber auch vorgesehen sein, dass als Aktionszyklus ein Integrationszyklus für einen Messwert oder dergleichen vorgesehen ist, wobei zur Sicherstellung einer ausreichend hohen Ergebnisqualität festgelegt ist, dass ein derartiger Integrationszyklus mehrfach, nämlich entsprechend einer vom Programmierer vorgebbaren Anzahl, durchlaufen werden soll. Unter Rückgriff auf derartige Aktionszyklen und die vom Programmierer modulspezifisch jeweils vorgegebene Anzahl der vom jeweiligen Modul jeweils zu durchlaufenden Zyklen kann somit der Datenaustausch und insbesondere das Timing und die Abstimmung zwischen den einzelnen Funktionsmodulen entsprechend dem übergeordneten Ablaufplan für das leittechnische System geeignet eingestellt und gegebenenfalls vom Programmierer modifiziert werden.

Bedienerseitig resultieren die hohe Komplexität der für großtechnische Anlagen zu beherrschenden Prozessabläufe, die Vielzahl der dabei zu berücksichtigenden Parameter sowie die üblicherweise große Anzahl der eingesetzten Komponenten üblicherweise in einer vergleichsweise komplexen Bedienstruktur auch des leittechnischen Systems an sich, die beispielsweise auch in einer vergleichsweise komplexen Leitwarte und entsprechend komplexen Bedienoberflächen des leittechnischen Systems resultieren. Aus diesen Gründen, und auch um das Bedienpersonal zielstrebig mit den zu beherrschenden Prozessabläufen vertraut zu machen, sind für die leittechnischen Systeme großtechnischer Anlagen üblicherweise umfangreiche Einweisungen und Trainings für das Bedienpersonal erforderlich. Während dieser Trainings werden neben den normalerweise zu erwartenden betrieblichen Situationen in der jeweiligen technischen Anlage auch eigentlich unerwünschte oder unerwartete Szenarien wie beispielsweise Störfälle oder dergleichen simuliert. Dabei wird das leittechnische System, entkoppelt vom eigentlichen Anlagenzustand, mit entsprechenden Systemparametern, die zur Simulation des jeweils gewünschten Zustands geeignet sind, beaufschlagt.

Beispielsweise um ein effektives und wirksames Training auch ungewöhnlicher Situationen durch geeignete Simulationen zu ermöglichen, kann für derartige Anlagen eine so genannte Zeitraffer-Funktionalität sehr wünschenswert sein, mit der die zu simulierenden Abläufe schneller als im Realzustand berechnet und dargestellt werden können. Zur Bereitstellung einer derartigen Zeitraffer-Funktionalität könnte grundsätzlich die Zyklusrate des leittechnischen Systems im Simulationsmodus erhöht werden. Infolgedessen würden die Funktionsmodule schneller arbeiten, so dass das leittechnische System in seiner Gesamtheit eine entsprechend schnellere Prozessbearbeitung bieten würde. Gerade bei komplexen Systemen ist die Realisierung einer Zeitraffer-Funktionalität durch entsprechende Erhöhung der Zyklusrate jedoch nur begrenzt möglich, da eine derartige Intensivierung der Rechenaktivitäten unmittelbar zu einer entsprechenden Mehrbelastung der Hardware-Rechnerbausteine, insbesondere der CPU, führen würde, da diese nur begrenzt belastbar ist. Ein solches system ist beispielsweise aus der WO 97/45778 bekannt.

Alternativ könnte zur Bereitstellung der genannten Zeitraffer-Funktionalität eine Umkonfiguration sämtlicher zeitabhängiger Parameter in der Systemauslegung vorgenommen werden, die dem Verhalten der Anlage bei einer entsprechend erhöhten Zykluszeit entsprechend würde. Dazu könnten beispielsweise entsprechende Zeit- oder Timerwerte in den Komponenten halbiert und die Integrationskonstanten in Integrator-Modulen um den Faktor 2 erhöht werden, um eine Zeitraffer-Funktionalität um den Faktor 2 zu erhalten. Bei einer derartigen Umsetzung einer Zeitraffer-Funktionalität müssten jedoch sämtliche Konstanten innerhalb der Programmstruktur der leittechnischen Anlage entsprechend dem gewünschten Zeitraffer-Faktor geändert werden. Gerade bei komplexen Anlagen ist hierfür der Aufwand nicht tragbar. Ein solches system ist beispielsweise aus der US 5,436,855 bekannt.

Der Erfindung liegt daher die Aufgabe zugrunde, ein Leittechniksystem für eine technische Anlage der oben genannten Art anzugeben, mit dem auf vergleichsweise einfache Weise die Bereitstellung einer Zeitraffer-Funktionalität, insbesondere zu Simulationszwecken, ermöglicht ist. Des Weiteren soll ein geeignetes Verfahren zum Betrieben eines derartigen leittechnischen Systems angegeben werden.

Bezüglich des Leittechniksystems wird diese Aufgabe erfindungsgemäß gelöst, indem eine Anzahl derjenigen Funktionsmodule, bei denen eine Datenausgabe nach erfolgtem Durchlauf einer modulspezifisch vorgegebenen Anzahl von Aktionszyklen erfolgt, zur nutzergesteuerten Variation der jeweils zu durchlaufenden Zyklen mit einem Zyklenzahl-Korrekturparameter beaufschlagbar ist.

Die Erfindung geht dabei von der Überlegung aus, dass zur zuverlässigen Bereitstellung einer Zeitraffer-Funktionalität unter Vermeidung der genannten Nachteile sowohl ein Eingriff in die eigentliche Zykluszeit als auch ein Eingriff in die jeweils modulspezifisch hinterlegten Konstanten und dergleichen unterbleiben sollte. Um bei gleichgehaltener Zykluszeit dennoch eine gemäß der vorgesehenen Zeitraffer-Funktionalität angestrebte Reduktion der tatsächlichen Reaktionszeit der jeweiligen Funktionsmodule zu erreichen, sollte hingegen die Anzahl der jeweils zu durchlaufenden Zyklen bis zur eigentlichen Datenausgabe geeignet modifiziert werden. Bei Aktionszyklen, die lediglich in der Art einer Warteschleife oder einer Zählfunktion zu Synchronisierungszwecken vorgesehen sind, kann dies auch ohne Qualitätsverlust bei den ermittelten Signalen oder Zwischenergebnissen erreicht werden. Bei den Fällen, bei denen im Rahmen des Aktionszyklus beispielsweise Parameterintegrationen oder dergleichen vorgenommen werden, könnte zwar ein gewisser Genauigkeitsverlust mit der Reduktion der vorgesehenen Zykluszahlen einhergehen; dieses ist bei Simulationszwecken aber im Allgemeinen akzeptabel.

Vorteilhafterweise wird die Zeitraffer-Funktionalität für das gesamte leittechnische System einheitlich umgesetzt, indem für sämtliche möglicherweise betroffenen Funktionsmodule ein einheitlicher oder gemeinsamer Zyklenzahl-Korrekturparameter bereitgestellt wird. Bei diesem Zyklenzahl-Korrekturparameter könnte es sich beispielsweise um einen entsprechenden Faktor handeln, mit dem die jeweils modulintern hinterlegten, den jeweiligen Ablauf steuernden Zyklenzahlen geeignet multipliziert werden. Durch die gemeinsame Bereitstellung eines einzigen Zyklenzahl-Korrekturparameters für sämtliche Funktionsmodule ist dabei auf besonders einfache Weise gewährleistet, dass synchron und abgestimmt aufeinander in sämtlichen Funktionsmodulen eine einheitliche Umnormierung oder Umdefinition der jeweils hinterlegten Soll-Zyklenzahlen erfolgt, so dass das System in seiner Gesamtheit nach wie vor synchronisiert und unter Wahrung der notwendigen Nachrichtensequenzen und dergleichen ablaufen kann.

Auf besonders einfache Weise ist die Bereitstellung eines gemeinsamen Zyklenzahl-Korrekturparameters für sämtliche Funktionsmodule erreichbar, indem in vorteilhafter Weise der Zyklenzahl-Korrekturparameter im zentralen Kontrollmodul oder an einem anderen zentralen, für alle Funktionsmodule zugänglichen Speicherbereich hinterlegt ist. Der Zyklenzahl-Korrekturparameter wird dabei vorteilhafterweise als globaler Parameter, also als ein Parameter, der sämtlichen Systemkomponenten gleichermaßen zur Verfügung gestellt wird und für diese einlesbar ist, bereitgehalten.

Bezüglich des Verfahrens wird die genannte Aufgabe gelöst, indem Funktionsmodulen, die eine Datenausgabe nach erfolgtem Durchlauf einer modulspezifisch vorgegebenen Anzahl von Aktionszyklen vornehmen, ein Zyklenzahl-Korrekturparameter zugeführt wird, anhand dessen die Anzahl der im jeweiligen Modul bis zur Datenausgabe zu durchlaufenden Aktionszyklen modifiziert wird.

Die mit der Erfindung erzielten Vorteile bestehen insbesondere darin, dass durch die Bereitstellung eines alternativen, insbesondere für Simulationen geeigneten Ausführungsmodus oder einer Zeitraffer-Funktionalität, bei dem dem oder jedem Funktionsmodul mitgeteilt wird, wie viele Zyklen bis zur jeweils vorgesehenen Datenausgabe zu durchlaufen sind, im jeweiligen Funktionen ohne Veränderung der Zykluszeit ausgeführt werden können, wobei dennoch ein Rechenergebnis erreichbar ist, das dem einer geringeren Zykluszeit oder einer höheren Zyklus-Frequenz entspricht. Damit ist die gewünschte Zeitraffer-Funktionalität auf besonders einfache Weise erreichbar, ohne dass die verfügbare Hardware-Kapazität zu stark belastet wird und ohne dass in den genannten Funktionsmodulen die individuellen Programmparameter, Zeitkonstanten und dergleichen nachgeführt werden müssten.

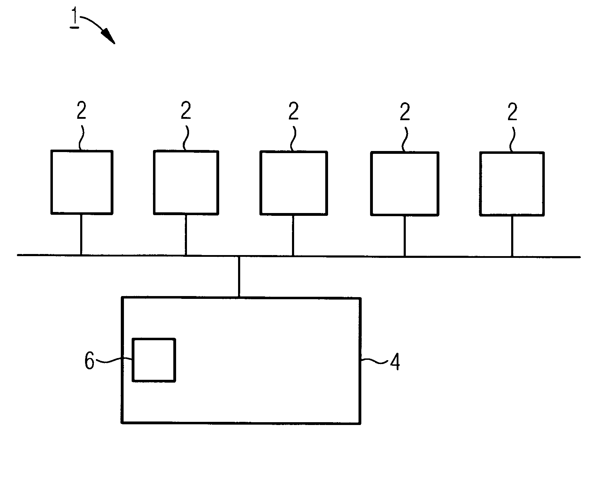

Ein Ausführungsbeispiel der Erfindung wird anhand einer Zeichnung näher erläutert. Darin zeigt die Figur schematisch ein Leittechniksystem.

Das Leittechniksystem 1 gemäß der FIG ist zur Steuerung und Überwachung der Anlagenprozesse in einer vergleichsweise komplexen technischen Anlage, nämlich im Ausführungsbeispiel einer Kraftwerksanlage, vorgesehen. Dazu umfasst das Leittechniksystem 1 eine Vielzahl von Funktionsmodulen 2, die jeweils zur Wahrnehmung einzelner Funktionen oder Aufgaben im Rahmen des Gesamtablaufs spezifisch ausgelegt sind. Die Funktionsmodule 2 können dabei als separate Hardwarekomponenten, als eigenständige Softwaremodule oder als Verbund aus beidem ausgestaltet sein. Durch die einzelnen Funktionsmodule 2 können dabei insbesondere die relevanten Komponenten der Kraftwerksanlage individuell auf ihren betrieblichen Zustand überwacht und geeignet gesteuert sein, wobei weitere Funktionsmodule 2 zur spezifischen Überwachung von Messparametern, zur Ermittlung von Zwischenergebnissen, zur Überwachung der Datenströme und dergleichen vorgesehen sein können.

Zur Koordinierung der Datenströme, des Datenaustauschs zwischen einzelnen Funktionsmodulen 2 und dergleichen ist das Leittechniksystem 1 darüber hinaus mit einem zentralen Kontrollmodul 4 versehen, das die Funktionsmodule 2 überwacht und gegebenenfalls geeignet ansteuert. Das übergeordnete Kontrollmodul 4, auch als "Scheduler" oder als "Task Manager" bezeichnet, steuert dabei bedarfsweise und gegebenenfalls einzelne Funktionsmodule 2 an und löst damit die Ausgabe geeigneter Ausgangssignale vom jeweiligen Funktionsmodul 2 aus, die ihrerseits als Eingangswerte für andere Funktionsmodule 2 herangezogen werden können.

Um dabei auch bei komplexen Programmabläufen und vergleichsweise vielschichtigem Datenaustausch zwischen den einzelnen Funktionsmodulen 2 einen geordneten und insbesondere zeitlich geeignet gestaffelten Signalaustausch zwischen den einzelnen Funktionsmodulen 2 zu gewährleisten, ist eine Vielzahl der Funktionsmodule 2 ihrer Auslegung nach zyklusgesteuert aufgebaut. Um dabei sicherzustellen, dass gewisse Ausgangssignale von den Funktionsmodulen 2 nicht zu früh und auch gegebenenfalls mit ausreichend hoher Rechenqualität ausgegeben werden, so dass eine zuverlässige Weiterverarbeitung in anderen Funktionsmodulen 2 gewährleistet ist, sind die genannten Funktionsmodule 2 dabei dafür ausgelegt, dass eine Datenausgabe, also beispielsweise die Ausgabe eines Stellsignals, eines Zwischenergebnisses, eines Parameterwerts oder dergleichen, vom jeweiligen Funktionsmodul 2 erst dann erfolgt, wenn dieses nach Auslösung der jeweiligen Funktionalität, also beispielsweise nach Anforderung durch das zentrale Kontrollmodul 4, eine programmierseitig vorgegebene, geeignet hinterlegte Anzahl von Aktionszyklen durchlaufen hat. Bei diesen Aktionszyklen kann es sich dabei in der Art eines Zählers um von der systemimmanenten Taktrate vorgegebene Zykluszeiten handeln, wobei durch das Abwarten der vorgegebenen Anzahl von Zykluszeiten sichergestellt wird, dass das genannte Ausgangssignal nicht zu früh in den allgemeinen Datenaustausch eingespeist wird. Alternativ kann es sich je nach Funktionalität des jeweiligen Funktionsmoduls 2 beim Aktionszyklus auch um andere Zyklusarten, beispielsweise um Integrationszyklen oder dergleichen handeln, bei denen entsprechende Aktivitäten zyklisch und wiederholt so lange ausgeführt werden, bis beispielsweise eine als ausreichend erachtete Rechenqualität oder dergleichen erreicht ist. Auch in diesem Fall ist üblicherweise in den jeweiligen Funktionsmodulen 2 ein geeigneter Sollwert für die zu durchlaufenden Zykluszahlen hinterlegt.

Das Leittechniksystem 1 ist zur bedarfsweisen, beispielsweise zu Simulationszwecken sehr wünschenswerten, Bereitstellung einer Zeitraffer-Funktionalität ausgelegt, bei der auf künstliche Weise im Simulationsfall eine um einen vorgebbaren Zeitfaktor beschleunigte Prozessabwicklung eingestellt werden kann. Um dies auf besonders einfache und ressourcenschonende Weise zu ermöglichen, ist das leittechnische System 1 zur bedarfsweisen Ausgabe eines vom Nutzer vorgebbaren Zyklenzahl-Korrekturparameters an die Funktionsmodule 2 ausgelegt. Dazu weist das zentrale Kontrollmodul 4 einen spezifisch zugewiesenen Speicherbereich 6 auf, in dem vom Nutzer über ein nicht näher dargestelltes Eingabegerät, beispielsweise eine Bildschirm-Tastatur-Einheit, ein geeigneter Zeitraffer-Kennwert (beispielsweise "Zeitraffer 3") hinterlegbar ist. Nach geeigneter Konvertierung wird aus dem solchermaßen vorgegebenen gewünschten Zeitrafferfaktor ein Zykluszahl-Korrekturfaktor errechnet und geeignet im Speicherbereich 6 abgelegt. Für den gewünschten Zeitraffer-Faktor 3 wird als Zykluszahl mit Korrekturparameter dabei im Speicherbereich 6 beispielsweise der Faktor 1/3 hinterlegt.

Bei Aktivierung des Zeitraffer-Modus im leittechnischen System 1 wird der im Speicherbereich 6 hinterlegte Zykluszahl-Korrekturparameter, der somit als globaler Parameter für sämtliche angeschlossenen Funktionsmodule 2 auslesbar ist, an die Funktionsmodule 2 ausgegeben. In den Funktionsmodulen 2 werden die dort gegebenenfalls hinterlegten Sollwerte für die zu durchlaufenden Zyklenzahlen mit dem zugeführten Zykluszahl-Korrekturparameter multipliziert, so dass sich effektiv ein entsprechend verminderter Sollwert für die im jeweiligen Funktionsmodul 2 zu durchlaufenden Zyklenzahlen ergibt.

Falls sodann eines der Funktionsmodule 2 entsprechend angesteuert und der demzufolge vorgesehene sequentielle Durchlauf mehrerer Zyklen initiiert wird, so wird als Endkriterium, mit dem die als ausreichend angesehene Zahl der Zyklendurchläufe festgelegt ist, der ursprünglich hinterlegte Sollwert, nunmehr modifiziert, um die Multiplikation mit dem Zyklenzahl-Korrekturparameter, herangezogen. Das jeweils angesprochene Funktionsmodul 2 liefert den Datenausgang somit bereits dann, wenn die entsprechend reduzierte Anzahl von Aktionszyklen durchlaufen wurde, so dass insgesamt eine entsprechend schnellere Reaktionszeit des jeweiligen Funktionsmoduls 2 eintritt.

## Patentansprüche

1. Leittechniksystem (1) für eine technische Anlage mit einer Mehrzahl von datenseitig miteinander verbundenen, von einem zentralen Kontrollmodul (4) überwachten Funktionsmodulen (2), **dadurch gekennzeichnet, dass** eine Anzahl derjenigen Funktionsmodule (2), bei denen eine Datenausgabe nach erfolgtem Durchlauf einer modulspezifisch vorgegebenen Anzahl von Aktionszyklen erfolgt, zur nutzergesteuerten Variation der jeweils zu durchlaufenden Zyklen mit einem Zyklenzahl-Korrekturparameter beaufschlagbar ist.

2. Leittechniksystem (1) nach Anspruch 1, bei dem sämtlichen zyklenzahlabhängigen Funktionsmodule (2) derselbe Zyklenzahl-Korrekturparameter zuführbar ist.

3. Leittechniksystem (1) nach Anspruch 1 oder 2, bei dem der Zyklenzahl-Korrekturparameter im zentralen Kontrollmodul (4) hinterlegbar ist.

4. Leittechniksystem (1) nach einem der Ansprüche 1 bis 3, bei dem der Zyklenzahl-Korrekturparameter als globaler Parameter bereitgehalten ist.

5. Verfahren zum Betreiben eines Leittechniksystems (1) nach einem der Ansprüche 1 bis 4, **dadurch gekennzeichnet, dass** Funktionsmodulen (2), die eine Datenausgabe nach erfolgtem Durchlauf einer modulspezifisch vorgegebenen Anzahl von Aktionszyklen vornehmen, ein Zyklenzahl-Korrekturparameter zugeführt wird, anhand dessen die Anzahl der im jeweiligen Modul (2) bis zur Datenausgabe zu durchlaufenden Aktionszyklen modifiziert wird.

## Claims

1. Central instrumentation and control system (1) for a technical installation comprising a plurality of functional modules (2) interconnected for data communication purposes and monitored by a central control module (4), **characterised in that** a cycle number correction parameter can be applied to a number of those functional modules (2) in which a data output is performed once a number of action cycles predetermined on a module-specific basis have been executed, in order to enable user-controlled variation of the cycles that are to be executed.

2. Central instrumentation and control system (1) according to claim 1, wherein the same cycle number correction parameter can be applied to all cycle number-dependent functional modules.

3. Central instrumentation and control system (1) according to claim 1 or 2, wherein the cycle number correction parameter can be stored in the central control module (4).

4. Central instrumentation and control system (1) according to one of claims 1 to 3, wherein the cycle number correction parameter is available as a global parameter.

5. Method for operating a central instrumentation and control system (1) according to one of claims 1 to 4, **characterised in that** a cycle number correction parameter is applied to the functional modules (2) which perform a data output once a number of action cycles predetermined on a module-specific basis have been executed, and based on this the number of action cycles to be executed in the respective module (2) up to the data output is modified.

## Revendications

1. Système ( 1 ) de technique de commande d'une installation technique, comprenant une multiplicité de modules ( 2 ) de fonction reliés les uns aux autres côté données et contrôlés par un module ( 4 ) central de contrôle, **caractérisé en ce qu'**un certain nombre des modules ( 2 ) de fonction, dans lesquels une sortie de données s'effectue, après avoir parcouru un nombre prescrit spécifique au module de cycles d'action, peut être alimenté en un paramètre de correction de nombre de cycles, pour une variation commandée par l'utilisateur des cycles à parcourir respectivement.

2. Système ( 1 ) de technique de commande suivant la revendication 1, dans lequel le même paramètre de correction de nombre de cycles peut être mémorisé pour l'ensemble des modules ( 2 ) de fonction qui dépendent du nombre de cycles.

3. Système ( 1 ) de technique de commande suivant la revendication 1 ou 2, dans lequel le paramètre de correction du nombre de cycles peut être mémorisé dans le module ( 4 ) central de commande.

4. Système ( 1 ) de technique de commande suivant l'une des revendications 1 à 3, dans lequel le paramètre de correction du nombre de cycles est maintenu à disposition en tant que paramètre global.

5. Procédé pour faire fonctionner un système ( 1 ) de technique de commande suivant l'une des revendications 1 à 4, **caractérisé en ce que** l'on envoie à des modules ( 2 ) de fonction, qui effectuent une sortie de données après qu'un nombre de cycles d'action prescrit d'une manière spécifique aux modules a été effectué, un paramètre de correction de nombre de cycles, au moyen duquel le nombre de cycles d'action à parcourir dans chaque module ( 2 ) jusqu'à la sortie de données est modifié.
